# EUROPÄISCHE PATENTSCHRIFT

(11) **EP 1 726 477 B1**
(45) Veröffentlichungstag und Bekanntmachung des Hinweises auf die Patenterteilung: **23.06.2010**
(21) Anmeldenummer: 06007761.7
(22) Anmeldetag: 13.04.2006
(51) Int. Cl.: B60P 3/20, B62D 33/04

(54) **Trennwand für Fahrzeugaufbau**
Partition wall for refrigerated vehicle
Cloison de séparation pour véhicule réfrigéré

(30) Priorität: 25.05.2005 DE 202005008196 U
(43) Veröffentlichungstag der Anmeldung: 29.11.2006
(73) Patentinhaber: Fahrzeugwerk Bernard Krone GmbH, 48480 Spelle (DE)
(72) Erfinder: Krone, Bernard, Dr., 48480 Spelle (DE); Stegemann, Ralf, 48429 Rheine (DE); Hummel, Alois, 73344 Gruibingen (DE)
(74) Vertreter: Pott, Ulrich

(56) Entgegenhaltungen:
- DE-A1- 10 010 725
- DE-U1- 9 013 442
- GB-A- 2 219 976
- JP-A- 61 222 835

## Beschreibung

Die Erfindung bezieht sich auf einen Fahrzeugaufbau mit einem kastenförmigen Laderaum, insbesondere einem zumindest bereichsweise kühlbaren Laderaum, mit zumindest einer Trennwand, die längsverschieblich innerhalb des Laderaumes über eine Verriegelungsvorrichtung an Anbauseitenwänden unter Zwischenlage von Dichtelementen arretierbar ist.

Fahrzeugaufbauten der vorgenannten Art sind bekannt. So ist beispielsweise aus dem DE 90 13 442.7 U1 und aus dem gattungsgemäßen GB 2 219 976 A ein Fahrzeug mit einem kühlbaren Laderaum bekannt, der-über eine Trennwand in zumindest zwei Laderaumbereiche trennbar ist. Die Trennwand kann mittels einer Verriegelungsvorrichtung unter Zwischenlage von aufpumpbaren Dichtungsschläuchen verriegelt werden. Damit ist eine weitgehende Luftabdichtung eines Laderaumes zu einem abgetrennten Laderaum möglich. Soll die Trennung aufgehoben werden, ist die Trennwand zu entriegeln und der abgetrennte Bereich wiederum durch eine Längenverschiebung der Trennwand freizugeben. Hat sich während der Trennung innerhalb der abgetrennten Bereiche des Laderaumes ein unterschiedliches Kühlniveau eingestellt, bereitet dieses beim Entriegeln und Öffnen der Trennwand Probleme, da unterschiedliche Drücke in den jeweiligen abgetrennten Bereichen vorherrschen und insofern erst mit Öffnen der Trennwand ein Druckausgleich herbeigeführt werden muß. Dies kann bei den bekannten Fahrzeugaufbauten nicht auf eine einfache Art kontrolliert vollzogen werden.

Es ist Aufgabe der vorliegenden Erfindung, einen Fahrzeugaufbau der eingangs genannten Art zu schaffen, bei dem auch bei Vorliegen unterschiedlicher Temperaturen in von der Trennwand abgetrennten Bereichen des Laderaumes eine Verbindung zwischen diesen Bereichen zu vollziehen ist, bevor die Trennwand in eine Öffnungsbewegung zu überführen ist.

Zur Lösung dieser Aufgabe ein Fahrzeugaufbau vorgesehen, der einen kastenförmigen Laderaum aufweist, der insbesondere zumindest bereichsweise kühlbar ist, mit zumindest einer verstellbaren Trennwand, die längsverschieblich innerhalb des Laderaumes über eine Verriegelungsvorrichtung an Aufbauseitenwänden unter Zwischenlage von Dichtelementen arretierbar ist und die eine verschließbare Entlüftungsöffnung umfaßt, durch deren Freigabe von der Trennwand getrennte Bereiche des Laderaumes druckausgleichbar sind, wobei die Verriegelungsvorrichtung ein Verriegelungsbetätigungselement aufweist, über das die Entlüftungsöffnung verschließbar und freigebbar ist und das in Richtung der Trennwand beweglich sowie von dieser hinweg beweglich ausgebildet ist, wobei ein Verschlußdeckel des Verriegelungsbetätigungselement in die Entlüftungsöffnung einführbar und aus dieser herausführbar ist.

Damit ist ein Fahrzeugaufbau geschaffen, bei dem durch die verschließbare Entlüftungsöffnung vor dem Öffnen einer Trennwand bzw. vor der Bewegung einer Trennwand im Öffnungssinne zunächst gezielt und kontrolliert ein Druckausgleich zwischen den Bereichen vorgenommen werden kann, so daß ein anschließender Öffnungsvorgang der Trennwand dann zu vollziehen ist, wenn in beiden Bereichen übereinstimmende Druckverhältnisse vorliegen. Dies ist insbesondere dann von wesentlichem Vorteil, wenn in einem durch die Trennwand abgetrennten Bereich des Laderaumes eine z.B. tiefere Temperatur vorherrscht als in einem anderen Bereich des Laderaumes, wobei sich temperaturbedingt unterschiedliche Drücke einstellen. Genauso ist die erfindungsgemäße Konstruktion dann von Vorteil, wenn sich durch das Verschieben der Trennwände innerhalb des Fahrzeugsaufbaus unterschiedliche Drücke eingestellt haben.

Besonders bevorzugt ist dasverriegelüngsbetätigungselement als verschwenkbarer Verriegelungshebel ausgebildet, der erfindungsgemäß neben seiner Schwenkbewegung um z.B. eine in Fahrzeugrichtung weisende horizontale Achse gleichzeitig auch noch eine Bewegungskomponente hin zur Trennwand und von dieser weg, also in aller Regel in Laderaumlängsrichtung vor und zurück, besitzt und endseitig den Verschlußdeckelteil zu tragen in der Lage ist, so daß die Entlüftungsöffnung mittels des Verschlußdeckels zu schließen und wieder freizugeben ist. Damit ist automatisch mit Entriegelung der Trennwand die Entlüftung und damit der Druckausgleich zu vollziehen, wobei die Ausbildung des Verriegelungsbetätigungselements als verschwenkbarer Verriegelungshebel einfache und damit kostengünstig ist.

Eine weitere besonders bevorzugte Ausführungsform sieht vor, daß im Schwenkbereich dieses Betätigungshebels eine weitere Ausnehmung in der Trennwand vorgesehen, in die der Verschlußdeckel wiederum einzusetzen ist, nachdem die Entlüftungsöffnung freigegeben wurde. Es ist mithin mit baulich außerordentlich einfachen Mitteln ein automatischer Entriegelungs- und Entlüftungsvorgang durchzuführen, indem das Verriegelungsbetätigungselement durch eine Zurückbewegung in Fahrzeugaufbaulängsrichtung eine Freigabe der Entlüftungsöffnung durchgeführt wird, danach eine Schwenkbewegung z.B. gegen den Uhrzeigersinn mit damit zu vollziehender Entriegelung der Trennwand und anschließend ein Vorschieben des Verriegelungsbetätigungselementes mitsamt dem Verschlußdeckel in die Ausnehmung innerhalb der Trennwand hinein durchgeführt wird, wobei der Verriegelungsbetätigungsmechanismus mitsamt dem Verriegelungsbetätigungselement seine Freigabeendstellung erreicht hat und der Verschlußdeckel annähernd versenkt in der Ausnehmung angeordnet ist. Dabei ist ein Verriegelungsbetätigungselement auch noch über den Verschlußdeckel innerhalb der Trennwand gesichert und arretiert und kann nicht ungewollt in eine verriegelnde Position zurücküberführt werden.

Der gesamte Aufbau aus Verschlußdeckel und Verriegelungsbetätigungselement ist sowohl in der Verschlußstellung der Lüftungsöffnung als auch in der Parkstellung des Verschlußdeckels innerhalb der Ausnehmung innerhalb der Trennwand außerordentlich flach bauend, so daß diese Anordnung den zur Verfügung stehenden Laderaum kaum beeinflußt.

Vorteilhafte weitere Ausgestaltungen der Erfindung ergeben sich aus weiteren Unteransprüchen, der Beschreibung und der Zeichnung. In der Zeichnung zeigen:
- Fig. 1: eine Vorderansicht auf ein Ausführungsbeispiel einer Trennwand für einen Fahrzeugaufbau nach der Erfindung;
- Fig. 2: eine Ansicht von links auf das Ausführungsbeispiel nach Fig. 1;
- Fig. 3: die Ansicht auf die Trennwand gemäß dem Ausführungsbeispiel nach Fig. 1 in einer Ansicht von hinten;
- Fig. 4: eine perspektivische Darstellung eines Ausführungsbeispiels eines Verschlußdeckels für das Ausführungsbeispiel nach Fig. 1, und
- Fig. 5: eine Explosionsdarstellung der Teile des Verschlußdeckels nach Fig. 4, ebenfalls in einer perspektivischen Darstellung.

In der Zeichnung sind grundsätzlich gleichwirkende Teile mit übereinstimmenden Bezugsziffern versehen.

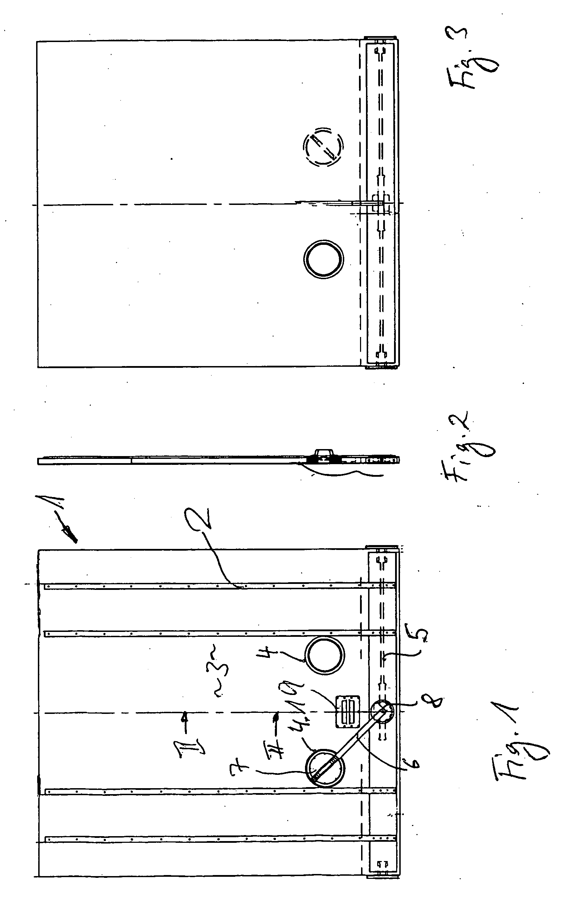

In der Zeichnung nicht im einzelnen gezeigt ist der Gesamtfahrzeugaufbau, der einen kastenförmigen Laderaum haben soll mit einem Bodenbereich, Seitenwänden und rückwärtigen Türen, einem oberen Kopfbereich und auf einem Fahrzeugchassis zu montieren ist. Innerhalb des Fahrzeugaufbaus soll die allgemein in Fig. 1 mit 1 bezifferte Trennwand 1 vorgesehen sein, um den inneren Laderaum in unterschiedliche Bereiche zu trennen. Dazu kann die Trennwand 1 längsverschieblich geführt sein und Dichtelemente aufweisen. Ebenfalls nicht näher dargestellt ist die Art der Verriegelung der Trennwand, die beliebig ausgebildet sein kann, z.B. mit Verriegelungshaken, Schloßelementen, ausfahrbare Spreizelementen u.dgl.

Für den hier interessierenden Bereich ist von vorrangiger Bedeutung, daß der Laderaumbereich durch die Trennwand abgedichtet in unterschiedlich temperierte Laderaumbereiche unterteilbar ist. Dazu hat die Trennwand 1, die über Leisten 2 ausgesteift ist, in ihrem Wandbereich 3 eine Entlüftungsöffnung 4. Der allgemein mit 5 gestrichelt angedeutete Verriegelungsmechanismus hat eine Verriegelungsstange 6 als Verriegelungsbetätigungselement, an deren Ende ein Verschlußdeckel 7 für die Entlüftungsöffnung 4 angebracht ist. In der in Fig. 1 dargestellten Position ist die Entlüftungsöffnung 4 frei, so daß ein Druckausgleich zwischen dem vor und hinter der Trennwand gelegenen Bereichen des Laderaumes stattfinden kann. Im Schwenkbereich der Entriegelungsstange 6 befindet sich eine Ausnehmung 4.1 in der Trennwand, in der der Verschlußdeckel 7 geparkt werden kann. Diese Ausnehmung 4.1 entspricht von ihrem Durchmesser her der Entlüftungsöffnung 4, ist jedoch nicht durch die Trennwand 1 durchgehend ausgebildet (sh. die um 180° geklappte Stellung der Trennwand in Fig. 3).

Oberhalb der Schwenkachse 8 des Verriegelungshebels 6 ist in der Trennwand noch ein Handgriff 9 vorgesehen. Sowohl in der Position des Verschlußdeckels 7 innerhalb der Entlüftungsöffnung 4 als auch innerhalb der Ausnehmung 4.1 ist der Verschlußdeckel 7 im wesentlich versenkt angeordnet, so daß der Verriegelungshebel 6 wie auch der Verschlußdeckel 7 sich sehr eng an die Trennwand 1 anlehnen, so daß diese Teile kaum in den Laderaum hineinragen und somit so gut wie keinen Laderaum beanspruchen. Bei einer Betätigung des Verriegelungshebels 6 aus seiner Verriegelungsstellung in die Entriegelungsstellung und zurück wird automatisch die Trennwand 1 bei gleichzeitiger Entlüftung bzw. bei einem gleichzeitigen Druckausgleich der durch diese Trennwand 1 abgetrennten Bereiche des Laderaums entriegelt bzw. bei umgekehrter Bewegung verriegelt bei gleichzeitigem Verschließen der Entlüftungsöffnung 4.

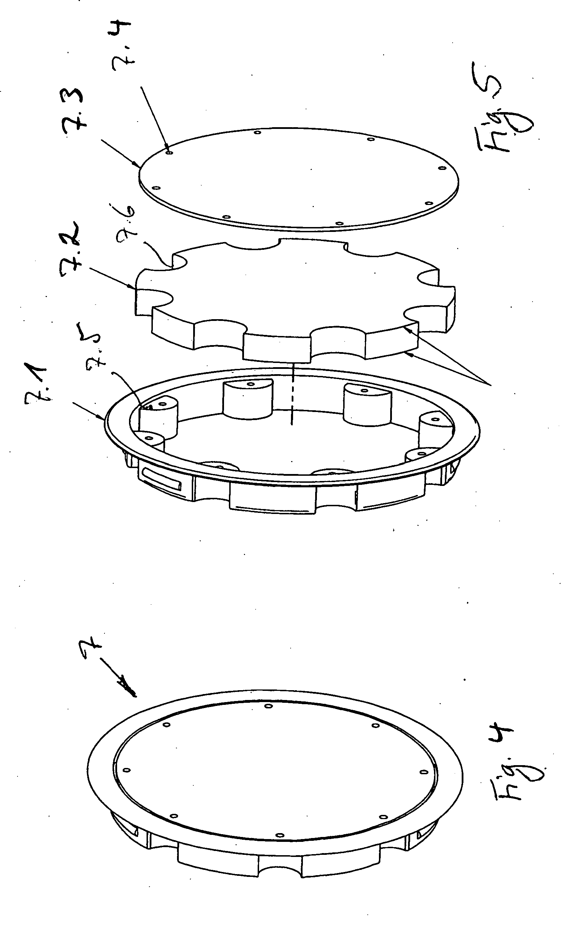

Bevorzugterweise ist der aus den Fig. 4 und 5 ersichtliche Verschlußdeckel 7 dreiteilig ausgebildet mit einem Basisteil 7.1, einem Verschlußelement 7.2 und einem Dekkelteil 7.3 mit Schrauböffnungen 7.4. Dabei kann das Verschlußelement als Isolierteil ausgebildet sein, wobei das Basisteil 7.1 und das Verschlußteil 7.2 Vorsprünge 7.5 und Ausnehmungen 7.6 haben, welche komplementär zueinander ausgebildet sind zwecks einer verdrehsicheren Anordnung innerhalb des Verschlußdeckels. Damit ist mittels des Verschlußdeckels auch Isolierungsanforderungen gerecht zu werden.

## Patentansprüche

1. Fahrzeugaufbau mit einem kastenförmigen Laderaum, insbesondere einem zumindest bereichsweise kühlbaren Laderaum, mit zumindest einer verstellbaren Trennwand (1), die längsverschieblich innerhalb des Laderaumes über eine Verriegelungsvorrichtung (5) an Aufbauseitenwänden unter Zwischenlage von Dichtelementen arretierbar ist und die eine verschließbare Entlüftungsöffnung (4) umfaßt, durch deren Freigabe von der Trennwand getrennte Bereiche des Laderaumes druckausgleichbar sind, **dadurch gekennzeichnet, daß** die Verriegelungsvorrichtung (5) ein Verriegelungsbetätigungselement (6) aufweist, über das die Entlüftungsöffnung (4) verschließbar und freigebbar ist und das in Richtung der Trennwand (1) beweglich sowie von dieser hinweg beweglich ausgebildet ist, wobei ein Verschlußdeckel (7) des Verriegelungsbetätigungselement (6) in die Entlüftungsöffnung (4) einführbar und aus dieser herausführbar ist.

2. Fahrzeugaufbau nach Anspruch 1, **dadurch gekennzeichnet, daß** das Verriegelungsbetätigungselement (6) als schwenkbarer Verriegelungshebel ausgebildet ist.

3. Fahrzeugaufbau nach Anspruch 1 oder 2, **dadurch gekennzeichnet, daß** der Verschlußdeckel (7) doppelwandig ausgebildet ist.

4. Fahrzeugaufbau nach einem der Ansprüche 1 bis 3, **dadurch gekennzeichnet, daß** die Trennwand (1) neben der Entlüftungsöffnung (4) eine Aufnahme (4.1) für ein Verschlußelement der Entlüftungsöffnung (4) hat.

5. Fahrzeugaufbau nach Anspruch 4, **dadurch gekennzeichnet, daß** der Verschlußdeckel (7) einerseits in die Entlüftungsöffnung (4) und andererseits in die Aufnahme (4.1) der Trennwand (1) einführbar ist.

6. Fahrzeugaufbau nach einem der Ansprüche 1 bis 5, **dadurch gekennzeichnet, daß** der Verschlußdeckel (7) dreiteilig ausgebildet ; mit einem im wesentlichen ringförmig ausgebildeten Basisteil (7.1), einem in dieses einsetzbaren Verschlußelement (7.2) und einem Deckelteil (7.3) ausgebildet ist.

7. Fahrzeugaufbau nach Anspruch 6, **dadurch gekennzeichnet, daß** der Verschlußelement (7.2) als Isolierteil ausgebildet ist.

8. Fahrzeugaufbau nach Anspruch 6 oder 7, **dadurch gekennzeichnet, daß** das im wesentlichen ringförmige Basisteil (7.1) Vorsprünge (7.4) und das Verschlußelement (7.2) entsprechend komplementär ausgebildet Ausnehmungen (7.5) umfassen.

## Claims

1. Vehicle body having a box-like load-carrying space, and in particular a load-carrying space of which at least a region or regions can be refrigerated, having at least one shiftable partition (1) which is longitudinally displaceable within the load-carrying space and can be locked to side-walls of the vehicle body, with sealing members interposed, by means of a locking arrangement (5) and which comprises a venting opening (4) which can be closed off and by the release of which from the partition pressure can be equalised between separate regions of the load-carrying space, **characterised in that** the locking arrangement (5) has a member (6) for actuating the locking action by means of which the venting opening (4) can be closed off and can be opened and which is designed to be movable towards the partition (1) and away therefrom, a closing-off cover (7) belonging to the member (6) for actuating the locking action being able to be introduced into the venting opening (4) and withdrawn therefrom.

2. Vehicle body according to claim 1, **characterised in that** the member (6) for actuating the locking action takes the form of a pivotable locking lever.

3. Vehicle body according to claim 1 or 2, **characterised in that** the closing-off cover (7) is of a double-walled form.

4. Vehicle body according to one of claims 1 to 3, **characterised in that**, as well as the venting opening (4), the partition (1) also has a receptacle (4.1) for a closing-off member for the venting opening (4).

5. Vehicle body according to claim 4, **characterised in that** the closing-off cover (7) can be introduced on the one hand into the venting opening (4) and on the other hand into the receptacle (4.1) in the partition (1).

6. Vehicle body according to one of claims 1 to 5, **characterised in that** the closing-off cover (7) is of a three-part form, having a base part (7.1) of substantially annular form, a closing-off member (7.2) which can be inserted in the latter, and a covering part (7.3).

7. Vehicle body according to claim 6, **characterised in that** the closing-off member (7.2) is in the form of an insulating part.

8. Vehicle body according to claim 6 or 7, **characterised in that** the substantially annular base part (7.1) comprises projections (7.4) and the closing-off member (7.2) comprises recesses (7.5) of an appropriate complementary form.

## Revendications

1. Caisse de véhicule comprenant un espace de chargement en forme de caisson, en particulier un espace de chargement réfrigéré au moins par zones, comprenant au moins une cloison de séparation (1) mobile pouvant être bloquée lors de son déplacement longitudinal à l'intérieur de l'espace ce chargement par un dispositif de verrouillage (5) sur les parois latérales de la caisse en intercalant des éléments d'étanchéité et comportant une ouverture de ventilation (4) pouvant être fermée et dont le déblocage permet de compenser la pression des zones de l'espace de chargement séparées par la cloison de séparation, **caractérisée en ce que** le dispositif de verrouillage (5) comprend un élément d'actionnement de verrouillage (6) par l'intermédiaire duquel l'ouverture de ventilation (4) peut être fermée et débloquée et conçu de manière à se déplacer en direction de la cloison de séparation (1) et à s'éloigner de celle-ci, un couvercle de fermeture (7) de l'élément d'actionnement de verrouillage (6) pouvant être introduit dans l'ouverture de ventilation (4) et extrait de celle-ci.

2. Caisse de véhicule selon la revendication 1, **caractérisée en ce que** l'élément d'actionnement de verrouillage (6) est conçu comme un levier de verrouillage pivotant.

3. Caisse de véhicule selon la revendication 1 ou 2, **caractérisée en ce que** le couvercle de fermeture (7) est conçu avec deux parois.

4. Caisse de véhicule selon l'une quelconque des revendications 1 à 3, **caractérisée en ce que** la cloison de séparation (1) présente en plus de l'ouverture de ventilation (4) un logement (4.1) pour un élément de fermeture de l'ouverture de ventilation (4).

5. Caisse de véhicule selon la revendication 4, **caractérisée en ce que** le couvercle de fermeture (7) peut être introduit d'une part dans l'ouverture de ventilation (4) et d'autre part dans le logement (4.1) de la cloison de séparation (1).

6. Caisse de véhicule selon l'une quelconque des revendications 1 à 5, **caractérisée en ce que** le couvercle de fermeture (7) est conçu en trois parties, une partie de base (7.1) conçue de manière sensiblement annulaire, un élément de fermeture (7.2) pouvant être inséré dans ladite partie de base et une partie couvercle (7.3).

7. Caisse de véhicule selon la revendication 6, **caractérisée en ce que** l'élément de fermeture (7.2) est conçu comme une pièce isolante.

8. Caisse de véhicule selon la revendication 6 ou 7, **caractérisée en ce que** la partie de base (7.1) sensiblement annulaire comporte des saillies (7.4) et l'élément de fermeture (7.2) des évidements (7.5) conçus d'une manière complémentaire.
